# FASCICULE DE BREVET EUROPEEN

(11) **EP 3 945 344 B1**
(45) Date de publication et mention de la délivrance du brevet: **15.03.2023**
(21) Numéro de dépôt: 21178065.5
(22) Date de dépôt: 07.06.2021
(51) Int. Cl.: G01S 13/76, G01S 17/933, G01S 13/78

(54) **RADAR SECONDAIRE AMELIORANT LA SECURITE AERIENNE PAR LA DETECTION ADS-B TRES LONGUE PORTEE**
SEKUNDÄRRADAR ZUR VERBESSERUNG DER FLUGSICHERHEIT DURCH ERKENNUNG VON ADS-B MIT SEHR GROSSER REICHWEITE
SECONDARY RADAR IMPROVING AERIAL SAFETY BY EXTENDED RANGE ADS-B DETECTION

(30) Priorité: 28.07.2020 FR 2007963
(43) Date de publication de la demande: 02.02.2022
(73) Titulaire: THALES, 92400 Courbevoie (FR)
(72) Inventeur: BILLAUD, Philippe, 91470 LIMOURS (FR); PANNIER, Jean-Marie, 91470 LIMOURS (FR)
(74) Mandataire: Atout PI Laplace

(56) Documents cités:
- FR-A1- 3 075 398
- LO SHERMAN ET AL: "Using Traffic Information Services Broadcast (TIS-B) signals for aviation navigation", 2016 IEEE/ION POSITION, LOCATION AND NAVIGATION SYMPOSIUM (PLANS), IEEE, 11 avril 2016 (2016-04-11), pages 779-788, XP032905911, DOI: 10.1109/PLANS.2016.7479773

## Description

La présente invention se situe dans le domaine du contrôle du trafic aérien (ATC) tant civil que militaire.

Actuellement, le contrôle aérien est principalement basé sur le radar secondaire dont la fiabilité de détection est largement reconnue, le radar secondaire assurant la surveillance synchrone des aéronefs selon les protocoles SSR et mode S. Par ailleurs, la réception asynchrone des squitters longs ADS-B (Automatic Dépendent Surveillance-Broadcast ou « Surveillance dépendante automatique en mode diffusion ») (les squitters sont des informations de position fournies par des avions qui ne sont pas déclenchées en réponse de signaux d'interrogation radar, mais sont émises automatiquement depuis des moyens d'émissions des avions), prévus pour assurer l'anticollision (TCAS : Traffic alert and Collision Avoidance System ou « Système d'avertissement de trafic et d'évitement de collision ») à bord des aéronefs, est exploitée au niveau de l'ATC au sol fournissant ainsi une partie du système de surveillance coopérative.

La demande de brevet FR3075398 divulgue par exemple un procédé de localisation de cibles émettrices de squitters ADS-B par un radar secondaire comportant une antenne présentant un diagramme de rayonnement formant une voie somme dite SUM, un diagramme de rayonnement formant une voie différence dite DIFF et un diagramme formant une voie de contrôle dite CONT, le radar secondaire ayant couverture d'interrogation prédéfinie (cela est toujours le cas par construction), la localisation desdites cibles étant effectuée selon les étapes suivantes : - détection de squitters ADS-B reçus sur ladite voie CONT, sur ladite voie SUM et sur ladite voie DIFF; - mesure au moins de la puissance desdits squitters et de leur azimut par rapport audit radar.

Cette surveillance peut être couplée à une surveillance de type IFF (Identification Friend or Foe ou « Identification ami/ennemi »), des interrogateurs IFF assurant l'identification des aéronefs selon divers protocoles militaires.

Au sein d'une structure unique regroupant ces senseurs, l'utilisation opérationnelle de ces différentes activités nécessite le fonctionnement simultané :
- de l'écoute synchrone du radar secondaire SSR/mode S et de l'interrogateur IFF en cas d'utilisation de ce dernier, ces modes synchrones exploitant les faisceaux formés SUM et DIFF;
- de l'écoute asynchrone soit des squitters civils en ADS-B soit des squitters militaires en mode 5, ces modes asynchrones exploitant la couverture omnidirectionnelle du diagramme de contrôle (noté CONT) composé des diagrammes de contrôle avant (noté CONT_Front) et arrière (noté CONT-Back).

Classiquement, les squitters ADS-B sont émis sans sollicitation du radar secondaire sur un rythme propre à l'émetteur, qui dépend notamment de l'état de l'émetteur et de la nature de l'information émise. Il en résulte que :
- L'écoute par un récepteur ADS-B doit être omnidirectionnelle, alors que :
   - Le gain antennaire est souvent faible, de 11 à 15 dBi par exemple, en fonction du nombre d'antennes employées pour couvrir 360° dans le cas d'un récepteur ADS-B autonome dédié ;
   - La portée garantie annoncée est de l'ordre de 150 Nm, voire un peu plus selon la qualité du transpondeur émettant le squitter et le nombre d'antennes employées au niveau du récepteur ADS-B;
- Par principe, la localisation d'une cible en ADS-B nécessite, de plus, deux squitters de position quasi consécutifs.

La réception et le traitement des informations ADS-B ont été identifiés comme des fonctions essentielles pour les nouvelles générations de radars secondaires. Lors de l'intégration de la fonction ADS-B au sein de la structure d'un radar secondaire, la fonction de réception exploite principalement le diagramme CONT-Front et CONT-Back pour avoir une couverture d'écoute plus proche de 360°. Ces diagrammes présentent en général un gain de l'ordre de plus de 17 dB, plus faible que le gain maximum du diagramme somme (noté SUM). Or ce dernier, utilisé pour la détection synchrone en application civile ou militaire avec de l'ordre de 27dBi, permet de garantir juste une portée de détection de l'ordre de 250 Nm.

Contrairement au mode synchrone, en application civile ou militaire, la portée en Radar est classiquement limitée en premier par la portée de la voie montante à 1030 MHz (c'est-à-dire par la puissance des interrogations émises et la sensibilité en réception des transpondeurs), la portée en ADS-B est limitée uniquement par la voie descendante à 1090 MHz, c'est-à-dire la puissance du transpondeur et la sensibilité du récepteur ADS-B. En effet, de façon intrinsèque à la structure du radar secondaire, la voie descendante (réception) est plus sensible que la voie montante (émission) afin d'assurer que toute réponse générée par le transpondeur puisse être reçue et exploitée.

Il en résulte que l'écart de gain opérationnel entre radar synchrone et écoute asynchrone ADS-B, toute chose égale par ailleurs au niveau de l'architecture entre les deux senseurs, est de l'ordre de 8 à 10 dB. Cela conduit, dans une structure de récepteur ADS-B intégrée à un radar secondaire, à une portée garantie en ADS-B de l'ordre typiquement de 100 Nm, en considérant de plus qu'une réception de réponse asynchrone utilisant le diagramme de contrôle (CONT) a beaucoup plus de chance d'être garblée qu'une réponse synchrone sur le diagramme SUM car il est bien plus étroit par nature, de l'ordre de 3°. On peut ajouter que le chevauchement des réponses, dites alors garblées, qui s'imbriquent entre-elles rend plus difficile leur détection et leur décodage. Le taux de réponse garantie ADS-B en environnement chargée en avions, au niveau de la réception, est donc de deux à trois fois plus faible que celle du radar secondaire mode S.

Des solutions de l'art antérieur sont connues pour tenter de surmonter ces manques de performance. En particulier, l'état de l'art dans un récepteur ADS-B dédié consiste à augmenter le nombre d'antennes indépendantes pour couvrir les 360° pour apporter une protection de sélectivité en azimut et simultanément un gain en réalisant un faisceau associé à chaque récepteur. Les récepteurs sont couplés à un traitement commun regroupant les détections, supprimant les doublons de détections, ainsi notamment que le passage d'une cible d'un récepteur à l'autre pour construire des trajectoires ADS-B uniques.

Un défaut de ce type de solution est notamment le coût de l'infrastructure du système ADS-B qui croît avec le nombre d'antennes typiquement de 4 à 8 (multi antennes, multi descentes d'antenne, pylône multi faces, multi récepteurs, traitement ADS-B global ...).

Dans le cas d'un récepteur ADS-B intégré à une architecture radar, la détection sur les diagrammes somme (SUM) et différence (DIFF), en complément de celles sur les diagrammes CONT, permet un gain plus fort et une sélectivité en azimut meilleure mais que pendant une très faible partie du temps (de l'ordre de 1,4% correspondant à 5°/360°). Par conséquent, cela permet seulement d'assurer une meilleure couverture temporelle d'écoute sur 360° en complétant, dans l'axe de l'antenne, l'écoute ADS-B réalisée au niveau du gain du diagramme CONT. En effet, il est connu que la détection globale d'un récepteur ADS-B nécessite d'avoir deux squitters de position consécutifs pour élaborer une trajectoire. Ainsi, même si une première réponse est reçue sur le diagramme SUM, la seconde le sera inévitablement sur le diagramme CONT, et donc finalement limitée à la portée du seul diagramme CONT pour une réception ADS-B intégrée à une architecture de radar secondaire.

Un but de l'invention est notamment de pallier les inconvénients de l'art antérieur, en permettant notamment d'obtenir des détections ADS-B de cibles de très longue portée. A cet effet, l'invention a pour objet un procédé de localisation de cibles émettrices de squitters ADS-B par un radar secondaire comportant une antenne présentant un diagramme de rayonnement formant une voie somme dite SUM, un diagramme de rayonnement formant une voie différence dite DIFF et un diagramme formant une voie de contrôle dite CONT, la localisation desdites cibles étant effectuée selon les étapes suivantes :
- détection de squitters ADS-B reçues sur ladite voie CONT, sur ladite voie SUM et sur ladite voie DIFF ;
- mesure au moins de la puissance desdits squitters et de leur azimut par rapport audit radar ;
la localisation d'une cible émettrice de squitters ADS-B étant calculée en exploitant au moins de la détection d'un seul squitter ASD-B à partir de la position en latitude et longitude dudit radar et de la mesure en azimut par rapport audit radar, la cellule de position dite CPR codée dans ledit squitter étant sélectionnée par ladite mesure en azimut.

Dans le cas où deux positions codées CPR codées dans ledit squitter sont positionnées possibles dans un même secteur azimutal, on discrimine par exemple lesdites deux positions par utilisation de la puissance mesurée et de l'altitude codée dans ledit squitter ADS-B, la position retenue étant la position la plus vraisemblable selon un estimateur basé sur la visibilité de ladite cible et la cohérence de la puissance reçue par le radar selon la distance de la cible au radar.

Dans un mode de mise en oeuvre particulier, ledit procédé comporte une étape dans laquelle l'acquisition sélective d'une cible est assurée dès son entrée dans la couverture d'interrogation dudit radar en exploitant :
- La position codée dans les squitters ADS-B émis par ladite cible dès son entrée dans la couverture en réception dudit radar ;
- L'identité sélective de ladite cible contenue dans son adresse mode S codée dans lesdits squitters.
une seule interrogation sélective étant émise tous les N tours pour verrouiller la cible sur le code de la station radar et ainsi éviter la pollution des M réponses DF11 qu'un cible génère usuellement à chaque tours potentiellement dès son entrée dans ladite couverture d'interrogation jusqu'en zone de portée opérationnelle dudit radar.

Ledit procédé comporte par exemple une étape dans laquelle lesdites cibles étant détectées et localisées par leurs squitters ADS-B avant la couverture d'interrogation dudit radar, lesdites cibles sont mises en piste ADS-B dès l'entrée dans ladite couverture d'interrogation permettant leur acquisition par ledit radar secondaire puis lesdites pistes sont momentanément déverrouillées lors de leur entrée dans ladite couverture radar opérationnelle pour être aptes à détecter leur état de verrouillage éventuel par un autre radar, c'est-à-dire l'absence de réponses synchrones DF11, et ainsi potentiellement pouvoir alerter d'un conflit de code II/SI pour d'autres cibles mode S non ADS-B tout en assurant la surveillance sélective Mode S de cette cible dès son entrée dans la couverture opérationnelle dudit radar.

Ledit procédé comporte par exemple une étape dans laquelle on calcule dans une fenêtre temporelle glissante, par cellules géographique 3D, une moyenne de la différence entre la distance d'une cible mesurée par ledit radar et la distance de ladite cible codée dans les squitters ADS-B émis par ladite cible et ce sur l'ensemble des cibles lors de leur passage dans la cellule, ensuite chaque distance mesurée par le radar de toute cible en tout mode est alors corrigée en fonction des différences moyennes calculées pour la cellule géographique survolée par ladite cible.

Ledit procédé comporte par exemple une étape de mesure de la sensibilité des transpondeurs puis la détection de transpondeurs de sensibilité défaillante aux interrogations à 1030 MHz émises par ledit radar en interrogeant sélectivement ou non les cibles émettant des squitters ADS-B localisées par ledit procédé, à l'entrée de la couverture d'interrogation (43) dudit radar et en calculant la sensibilité du transpondeur à partir de la puissance reçue par le transpondeur lors de sa première réponse auxdites interrogations à 1030 MHz, un transpondeur est déclaré de sensibilité défaillante si celle-ci est supérieur à un seuil donné.

Ledit procédé comporte par exemple une étape dans laquelle la détection d'un altimètre défaillant associé au transpondeur d'une cible ADS-B est effectuée en exploitant, sur une série de cellules géographiques survolées par ladite cible, l'écart de la différence entre l'altitude barométrique et géométrique codée dans les squitters ADS-B émis par ladite cible à la moyenne dans une fenêtre temporelle glissante de la différence entre l'altitude barométrique et l'altitude géométrique calculé pour d'autres cibles par cellule pour chacune desdites cellules géographiques survolées par la dite cible, un altimètre étant jugé défaillant si ledit écart dépasse un seuil donné.

L'invention a également pour objet un radar apte à mettre en oeuvre un tel procédé.

D'autres caractéristiques et avantages de l'invention apparaîtront à l'aide de la description qui suit, faite en regard de dessins annexés qui représentent :
[Fig.1] La figure 1, des étapes possibles pour la mise en oeuvre de l'invention ;
[Fig.2] La figure 2, une illustration des diagrammes d'antenne ATC usuelle ;
[Fig.3] La figure 3, une illustration de la sensibilité azimutale en ADS-B intégré d'une antenne ATC usuelle ;
[Fig.4] La figure 4, une illustration de l'architecture d'un radar secondaire selon l'art antérieur, sans aucune réception ADS-B ;
[Fig.5] La figure 5, un exemple d'évolution d'architecture de radar secondaire mettant en oeuvre le procédé selon l'invention ;
[Fig.6] La figure 6, les différentes portées en interrogation et détection exploitées par un radar selon l'invention ;
[Fig.7] La figure 7, une illustration du principe de détection globale ADS-B avec deux squitters successifs ;
[Fig.8] La figure 8, une illustration du principe de détection ADS-B avec un seul squitter, selon l'invention ;
[Fig.9] La figure 9, une illustration de la levée d'ambiguïté ADS-B susceptible de se produire ;
[Fig.10] La figure 10, une illustration des différentes portées en jeu dans le parcours d'une cible entrante dans la couverture radar ;
[Fig.11] La figure 11, un exemple de zone de conflit de code II/SI entre radars dont les couvertures se chevauchent ;
[Fig.12] La figure 12, un exemple de carte des moyennes de différences entre altitude barométrique et altitude géométrique ;
[Fig.13] La figure 13, l'allure d'un exemple de distribution de l'écart d'altitudes dans une cellule géographique 3D ;
[Fig.14] La figure 14, un zoom sur une cible d'écart d'altitudes cohérent avec des cibles dans la même cellule géographique ;
[Fig.15] La figure 15, un zoom sur une cible présentant un écart d'altitudes incohérent avec des cibles dans la même cellule géographique.

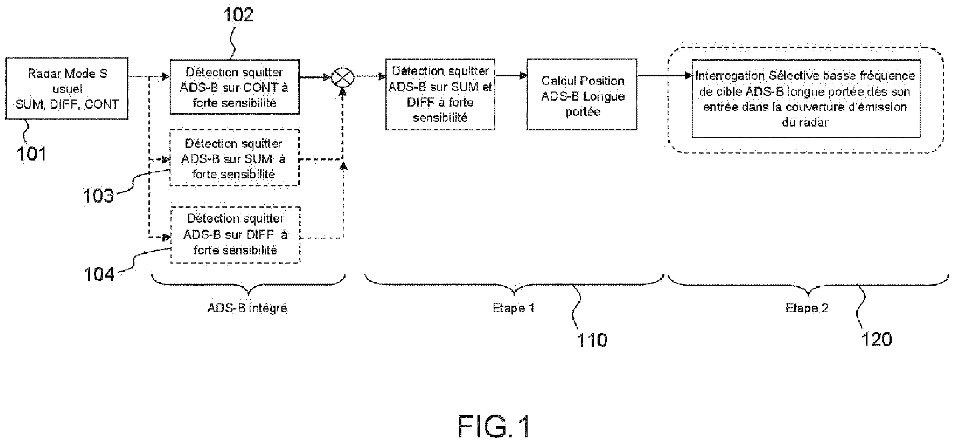

La figure 1 illustre les étapes pour la mise en oeuvre de l'invention. Deux étapes au moins sont nécessaires à cette mise en oeuvre. Pour cette mise en oeuvre, l'invention prévoit, la présence d'une fonction de détection ADS-B intégrée à une structure de radar secondaire 101 comportant :
- nécessairement une détection permanente 102 sur les diagrammes CONT_Front et CONT_Back à très forte sensibilité ;
- mais aussi en option une détection permanente complémentaire sur les diagrammes du lobe principal (détection 103 sur diagrammes SUM et détection 104 sur le diagramme DIFF) à plus faible sensibilité, de l'ordre de 15 dB, ceci pour rejoindre le gain d'antenne du diagramme CONT (CONT_Front et CONT_Back) et ainsi combler le creux de gain occupant environ 5° du diagramme CONT dans l'axe de l'antenne.

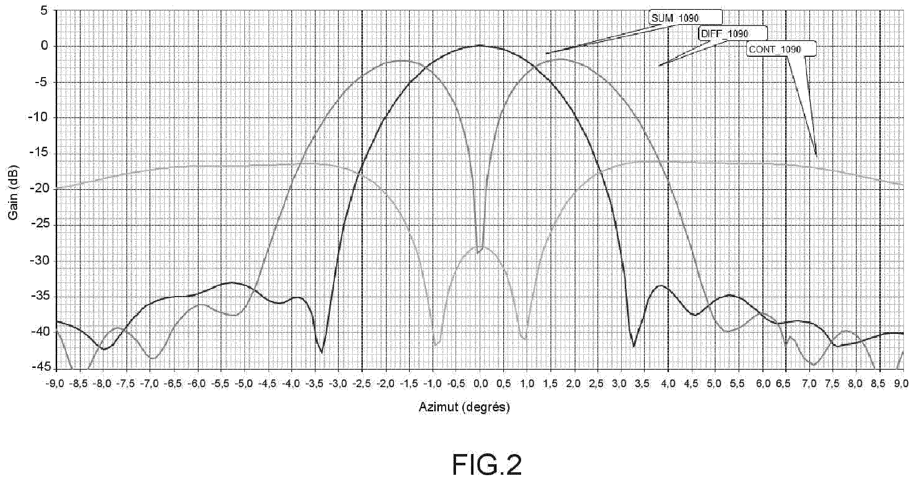

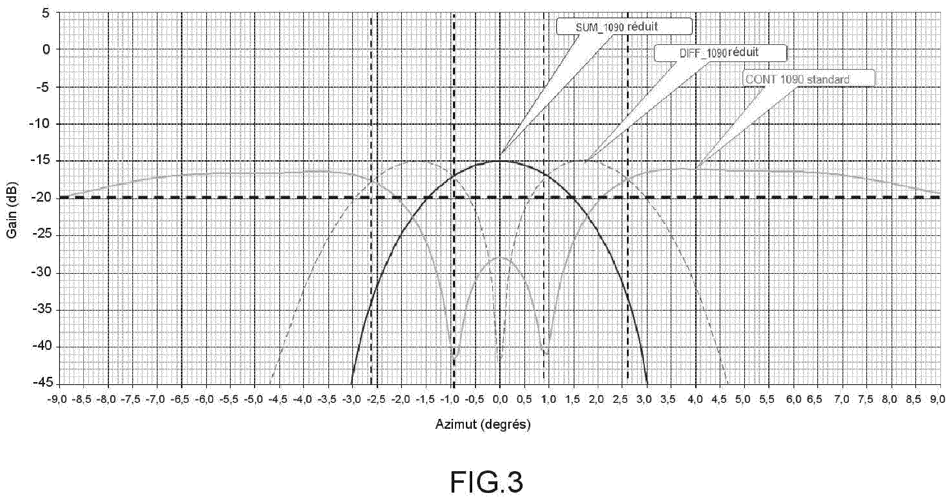

Les figures 2 et 3 illustrent les diagrammes d'antenne en jeu, en réception à 1090 MHz. La figure 2 présente les diagrammes d'antennes SUM, DIFF et CONT d'une antenne usuelle pour la fonction ATC d'un radar secondaire. Les gains sur les diagrammes SUM et DIFF sont bien supérieurs au gain du diagramme CONT autour de l'axe de l'antenne. La figure 3 présente la sensibilité azimutale en ADS-B intégré d'une antenne ATC usuelle, où les voies SUM, DIFF sont alignées à la même sensibilité en réception que la voie CONT.

On revient à la figure 1, dans la première étape 110 on effectue la détection des squitters ADS-B à très longue portée, on réalise ainsi :
- La détection de squitters ADS-B sur les diagrammes SUM et DIFF à très forte sensibilité ;
- Le calcul de la position de la cible avec un seul squitter, par les méthodes classiques d'écartométrie à partir des détections sur SUM et DIFF, comme cela sera détaillé dans la suite de la description.

On utilisera par la suite indifféremment les termes squitters ADS-B ou réponses ADS-B.

Dans la deuxième étape 120, on exploite opérationnellement la première étape 110. La détection passive, par l'ADS-B, d'un avion au-delà de la portée opérationnelle synchrone radar, voire jusqu'à deux fois plus loin, permet de l'exploiter avant même l'entrée de cet avion dans la couverture du radar, améliorant à la fois le fonctionnement du radar et la sécurité du système de surveillance ATC, comme cela sera démontré par la suite.

Dans le domaine radar, et plus généralement dans le domaine de la sécurité aérienne ATC :
- on réduit la pollution RF par le verrouillage basse fréquence de cibles dès leur entrée dans la couverture d'émission du radar, donc bien avant l'entrée dans la couverture opérationnelle du radar afin de limiter la pollution en remplaçant toutes les réponses « All Call » (DF11) par quelques réponses sélectives (DF04) en nombre bien inférieur ;
- on améliore la détection de conflits de code II/SI en limite de portée radar et assure la détection de cibles ADS-B dans la couverture radar et verrouillée à tort par un autre radar (c'est-à-dire plus spécifiquement les cibles ADS-B au-delà de la portée d'écoute ADS-B par le diagramme CONT) ;
- on améliore la précision de mesure distance synchrone du radar par compensation de la distorsion de la propagation ionosphérique.
Dans le domaine de la sécurité ATC, on effectue avant l'entrée dans la couverture opérationnelle du radar pour des avions équipés en ADS-B:
- la détection non polluante de sensibilité défaillante du transpondeur ;
- la détection d'altimètre défaillant associé au transpondeur.

Le principe de l'invention, ainsi que l'exploitation des différentes zones de détections seront décrits plus en détail par la suite. Dans un premier temps, on commence par décrire des adaptations possibles d'une architecture de radar secondaire pour mettre en oeuvre l'invention.

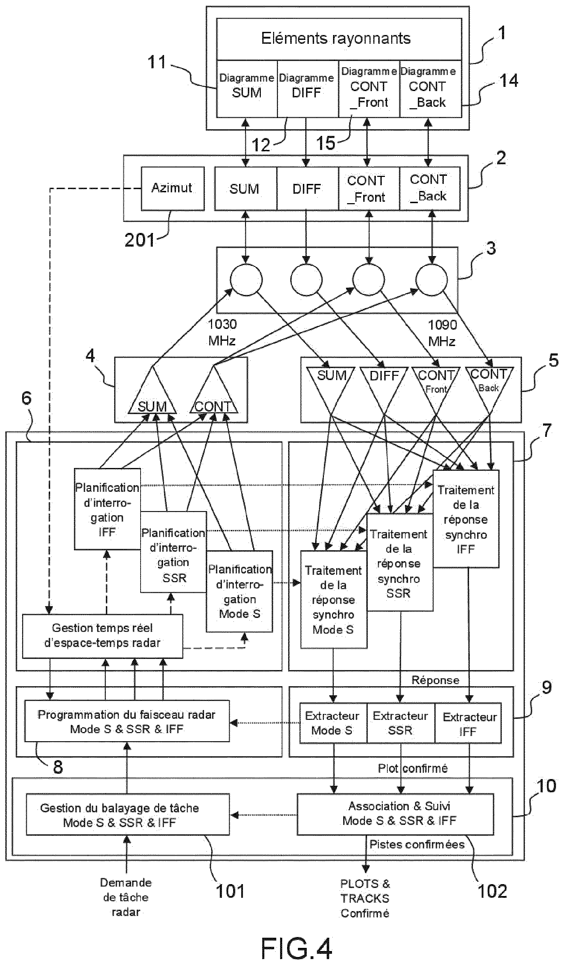

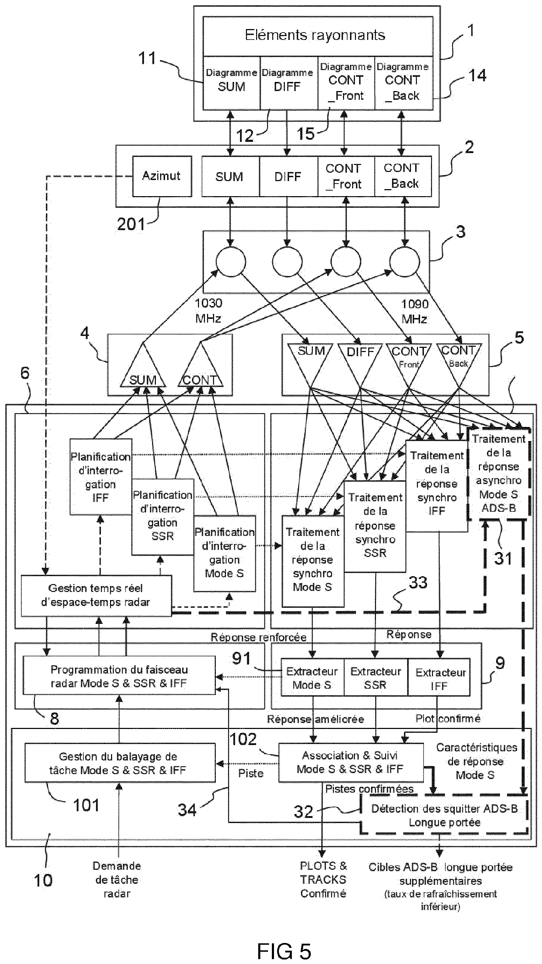

Les figures 4 et 5 illustrent donc l'évolution de l'architecture d'un radar mode S en regard de l'invention, la figure 4 illustrant une structure usuelle selon l'art antérieur et la figure 5 illustrant une structure mettant en oeuvre l'invention.

En regard de la figure 4 qui représente un exemple de synoptique d'un radar Mode S usuel, on rappelle les éléments constitutifs d'un tel radar. La figure 4 représente l'architecture minimale d'un radar secondaire Mode S sans la réception ADS-B intégrée par les diagrammes CONT_Front et CONT_Back qui n'est pas un équipement de base dans la configuration radar secondaire classique. La description qui suit présente une solution à quatre voies, SUM, DIFF, CONT_Front et CONT_Back, l'invention s'applique bien sûr pour une solution à trois voies SUM, DIFF et CONT.

Dans son emploi usuel, le radar secondaire fonctionne en mode synchrone, c'est-à-dire qu'il émet une interrogation et attend une réponse en cohérence avec celle-ci, ce qui lui permet de localiser par mesure (en azimut et distance) et d'identifier (par l'adresse Mode S) la cible. Le synoptique de la figure 4 fait apparaître ce fonctionnement synchrone du radar mode S :
- la partie gauche présente la génération des interrogations ;
- la partie droite présente le traitement synchrone des réponses associées ;
ainsi que les synchronisations entre celles-ci, illustrées par les flèches transverses entre gauche et droite.

Pour effectuer cette tâche, le radar est équipé d'une antenne 1 assurant le rayonnement des interrogations à 1030 MHz et des réponses en retour à 1090 MHz, selon quatre diagrammes 11, 12, 14, 15 dont les rôles sont classiquement pour :
- le diagramme SUM, interroger et détecter la réponse synchrone de la cible ;
- le diagramme DIFF, localiser finement la cible dans le faisceau SUM ;
- le diagramme CONT_Front, bloquer et réjecter les réponses issues de cibles face à l'antenne non présentes dans le faisceau principal de SUM ;
- le diagramme CONT_back, bloquer et réjecter les réponses issues de cibles au dos à l'antenne (donc forcément non présentes dans le faisceau principal de SUM).

Alors que les diagrammes SUM et DIFF sont classiquement fins avec des lobes à 3dB entre 2,4° à 10°, les diagrammes CONT_Front et CONT_Back cherchent à couvrir pratiquement 180° chacun.
L'antenne peut aussi être :
- de diagramme fixe, dite « mécanique » et tournante ;
- de diagramme évolutif, à balayage électronique, dite « AESA » fixe ou tournante.

Un joint tournant 2 et des câbles de descente d'antenne, pour une antenne tournante, assurent :
- le couplage RF des signaux transmis à 1030 MHz et reçus à 1090 MHz indépendamment pour les quatre diagrammes entre la partie tournante et la partie fixe du radar ;
- la diffusion de la position en azimut 201 de l'axe du lobe principal de l'antenne.

Un traitement RF comporte :
- un duplexeur ou circulateur 3 assurant le couplage RF entre les signaux transmis à 1030 MHz et reçus à 1090 MHz indépendamment pour les quatre diagrammes ;
- un émetteur 4 assurant :
   - la transmission des interrogations à 1030 MHz sur le diagramme SUM ;
   - la transmission des impulsions de blocage des transpondeurs en dehors du lobe SUM à 1030 MHz par les diagrammes CONT_Front et CONT_Back ;
   - ceci pour les différents protocoles secondaires : IFF, SSR et Mode S ;
- un récepteur 5 assurant la réception des réponses à 1090 MHz sur les quatre diagrammes SUM, DIFF, CONT_Front et CONT_Back, et le calcul de l'écartométrie pour les différents protocoles secondaires : IFF, SSR et Mode S.

Un traitement temps réel comporte :
- une gestion spatio-temporelle 6 assurant la gestion temps réel des périodes d'interrogations et d'écoutes associées pour les différents protocoles secondaires : IFF, SSR et Mode S ;
- un traitement du signal 7 assurant :
   - le traitement des réponses dans les périodes d'écoutes associées aux interrogations pour les différents protocoles secondaires : IFF, SSR et Mode S ;
   - la détection et le décodage des réponses synchrones dans le lobe principal de l'antenne en exploitant les quatre diagrammes :
      ∘ SUM : pour détecter les réponses reçues dans le lobe principal ;
      ∘ DIFF : pour localiser finement en azimut les réponses reçues dans le lobe principal SUM et éventuellement pour la discrimination de réponses emmêlées ;
      ∘ CONT_Front et CONT_Back : pour réjecter les réponses reçues sur les lobes secondaires de SUM et DIFF.

Un traitement dans le lobe principal de l'antenne comporte :
- une gestion 8 des cibles présentes dans le lobe, assurant :
   - la préparation des transactions (interrogations et réponses) à effectuer dans le prochain lobe pour les différents protocoles secondaires IFF, SSR et Mode S ;
   - la gestion des périodes IFF, SSR, Mode S « All Call » et Mode S « Roll Call » dans le lobe ;
   - le placement dynamique des interrogations et réponses sélectives Mode S dans la future période « Roll call » en fonction de l'état des transactions venant d'être effectuées et des nouveaux avions entrants dans le lobe ;
- des extracteurs 9 assurant la constitution de plots pour chacun des différents protocoles secondaires IFF, SSR et Mode S, à partir des réponses synchrones reçues dans le lobe selon le protocole employé lors des interrogations.

Un traitement multi tours 10 comporte :
- une gestion 101 des tâches Mode S à effectuer avec les cibles dans la couverture, assurant la prédiction de positions des cibles (rendez-vous d'antenne) et la préparation des tâches à effectuer associées à ces positions selon les demandes internes, externes et l'état des transactions des tours précédents ;
- une association des plots et un pistage 102 des cibles dans la couverture assurant le pistage des cibles pour améliorer les performances (élimination des faux plots, contrôle de données décodées notamment) et pour prédire la position future de celles-ci principalement, mais pas seulement, en Mode S.
Une interface avec les utilisateurs permet la prise en compte par le radar de différentes requêtes et la visualisation des plots et des poursuites de cibles.

La figure 5 présente les évolutions par rapport à l'architecture usuelle de la figure 4, ces évolutions étant présentées en traits discontinus gras. Alors que le fonctionnement du radar mode S est synchrone, on voit que les traitements ajoutés 31, 32 pour l'invention ne sont pas liés à l'émission et n'exploitent, pour la première étape 110 de l'invention, que la position en azimut de l'axe du lobe principal de l'antenne. La plupart des éléments restent inchangés, vérifiant ainsi la non intrusion de l'invention dans le fonctionnement opérationnel du radar mode S.

Les principaux éléments ajoutés ont les fonctions décrites ci-après :
Dans la gestion spatio-temporelle 6 :
   - Transmission 33 de la position azimut du lobe principal de l'antenne au traitement 31 des réponses asynchrones ADS-B (voir ci-dessous) ;
Dans le traitement du signal 7 :
   - Ajout du traitement 31 permanent (indépendamment des périodes d'écoutes aux interrogations) assurant la détection et le décodage des réponses asynchrones ADS-B en exploitant séparément mais également les quatre diagrammes SUM, DIFF, CONT_Front et CONT_Back à leur pleine sensibilté:
      - Pour détecter tous les squitters ADS-B reçus : DF17 ;
      - Pour en extraire l'adresse mode S ;
      - Pour enrichir chaque réponse décodée de ses caractéristiques :
         heure de détection, azimut du lobe principal de l'antenne lors de la détection, puissance reçues sur SUM, DIFF, CONT_Front et
         CONT_Back et dépointage du squitter ADS-B dans le faisceau principal de SUM et DIFF par écartométrie;
Dans le traitement non temps réel (traitement multi tours)
   - Ajout de la localisation 32 des cibles ADS-B à longue portée ;
   - Décision d'interrogation sélective 34 lors de l'entrée en portée d'interrogation synchrone.

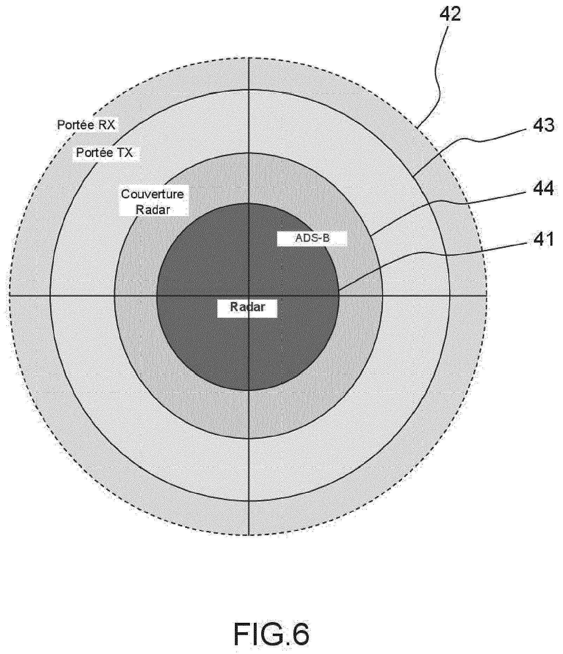

En regard de la figure 6, on revient sur le principe de l'invention. Un radar selon l'invention exploite toujours, classiquement, les diagrammes CONT pour la détection des squitters ADS-B. La portée du radar pour ce traitement classique ADS-B est illustrée par un premier cercle 41. En plus, comme cela sera décrit par la suite, l'invention exploite avantageusement la limite de portée en réception (RX) des signaux émis par les transpondeurs des avions environnants sur les voies SUM et DIFF, cette limite de portée étant illustrée par le cercle 42 de plus grand diamètre. La portée en réception étant elle-même supérieure à la portée maximale des interrogations émises par le radar (TX) et interprétées par le transpondeur illustrée par un troisième cercle 43 correspondant au transpondeur de grande sensibilité.

En d'autres termes, le principe de détection ADS-B longue portée selon l'invention est basé sur l'exploitation du différentiel de portée entre :
- La couverture opérationnelle du radar, illustrée par un dernier cercle 44, portée basée sur les valeurs garanties :
   - En émission à 1030 MHz, en considérant un transpondeur au minimum de sensibilité ;
   - En réception synchrone à 1090 MHz, en considérant un transpondeur au minimum de puissance ;
   - Le gain des diagrammes SUM et DIFF de l'antenne radar en mode synchrone ;
   - La couverture d'intérêt d'utilisation du radar, nécessairement plus étroite que le cumul des trois critères précédents ;
- La portée maximale 43 des interrogations à 1030 MHz, en considérant un transpondeur ayant un maximum de sensibilité, portée maximale qui est exploitée dans la deuxième étape 120 ;
- La portée maximal 42 en réception à 1090 MHz, en considérant un transpondeur émettant avec un maximum de puissance ;
- La portée opérationnelle ADS-B 41, pour une fonction ADS-B intégrée au radar, basée sur les valeurs garanties :
   - Du gain du diagramme CONT de l'antenne utilisée en ADS-B classique pour assurer la détection permanente des squitters ADS-B (voir par la suite) ;
   - En réception asynchrone à 1090 MHz en considérant un transpondeur au minimum de puissance.

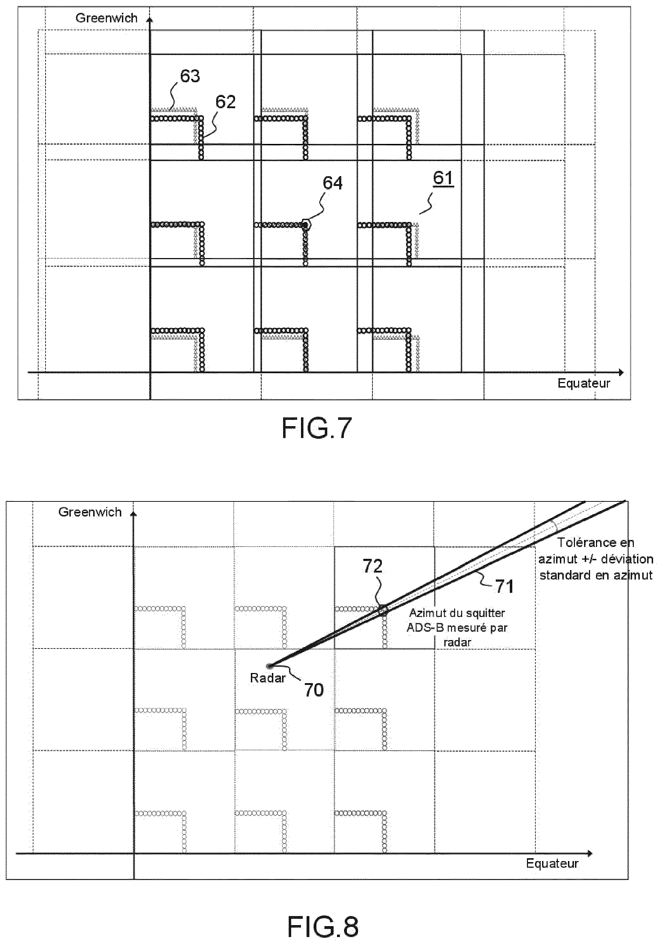

La figure 7 illustre le principe de détection globale ADS-B avec deux squitters (réponses ci-après), appliqué dans l'art antérieur comme rappelé en introduction. Il est bien connu dans la littérature que les informations de localisation des répondeurs ADS-B sont codé dans un format dit CPR (« Compact Position Reporting ») à partir de deux réponses ADS-B, une réponse étant émise selon une première trame de référence géographique dite paire et l'autre réponse étant émise selon une deuxième trame de référence géographique dite impaire. La figure 7 présente à titre d'exemple neuf cellules de réponses 61, les réponses paires 62 étant reproduites en gras et les réponses impaires 63 en caractères plus fins. Chaque cellule CPR 62, 63 contient une information de latitude et une information de longitude relative à la cellule, les cellules étant représentées dans un système d'axe où les ordonnées représentent les latitudes et les abscisses les longitudes. De façon connue, un récepteur ADS-B appliquant une telle détection globale, doit pour localiser une source d'émission ADS-B :
- Recevoir deux squitter ADS-B successifs de deux types différents : un squitter ADS-B selon la trame paire 62 et un squitter ADS-B selon la trame impaire 63 ;
- Déterminer la position de la source (cible) en calculant la seule cellule CPR 64, pour laquelle les positions paire et impaire correspondent.
et ainsi reconstituer la position absolue en latitude et longitude dans le référentiel terrestre (et non plus relative à la cellule).

La figure 8 illustre le principe de détection ADS-B selon l'invention. Ici, les réponses d'une seule trame sont représentées, par exemple la trame impaire. Le principe de l'invention consiste à localiser la position d'une cible à partir d'une seule réponse ADS-B (paire ou impaire) en exploitant simultanément :
- la position en latitude et longitude du radar 70;
- la mesure d'azimut 71 effectuée par le radar 70 lors de la réception de ce squitter ADS-B, mesure effectuée à partir des diagrammes SUM et DIFF.

En effet, connaissant la position en latitude et longitude du radar et la mesure en azimut du squitter (avec une tolérance donnée), il est alors possible de calculer la cellule CPR 72, satisfaisant les deux conditions suivantes :
- Position compacte ADS-B transmise dans le squitter reçu ;
- Mesure en azimut du squitter vu de la position du radar en latitude et en longitude.
et donc de localiser une cible ADS-B avec un seul squitter ADS-B. En référence à la figure 8, la mesure de l'azimut 71 permet de sélectionner la position 72 (cellule CPR) parmi les 9 possibles présentées sur la figure.

Pour résumer le processus de détection selon l'invention, on peut rappeler que lors de l'acquisition du squitter asynchrone sur SUM ou DIFF le radar mesure ses caractéristiques de façon identique à une réponse synchrone, obtenant :
- La position azimutale de l'antenne ;
- Le dépointage de la cible dans le faisceau SUM par écartométrie ;
- La puissance du squitter sur SUM et DIFF ;
La distance n'ayant pas de signification dans le cas d'une réponse asynchrone, le décodage du squitter fournit pour la cible :
- La position relative en latitude (CPR pair ou impair) ;
- La position relative en longitude (CPR pair ou impair) ;
- L'altitude.

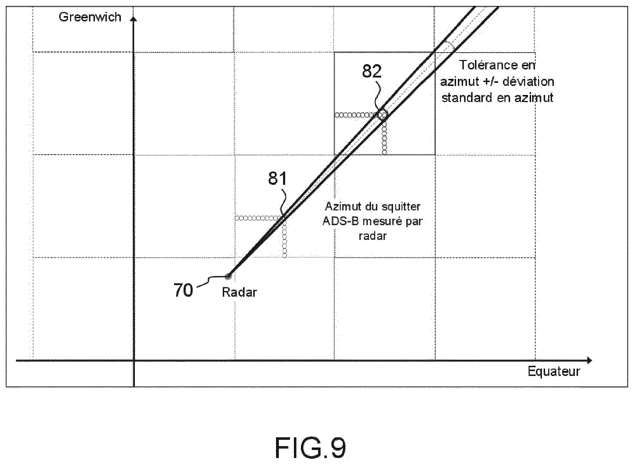

Lors de la localisation de la cible longue portée ADS-B, il est possible de rencontrer une ambiguïté géographique lorsque deux positions possibles 81, 82 de la cibles (dans deux cellules CPR contiguës) sont alignées avec la position du radar comme cela est illustré sur la figure 9. Dans ce cas, l'azimut mesuré 71 seul n'est plus un discriminant permettant de définir la bonne cellule. On exploite alors deux autres caractéristiques du squitter ADS-B reçu :
- La puissance du squitter sur SUM et/ou DIFF ;
- L'altitude déclarée de la cible.

Connaissant les caractéristiques du radar : position géographique (dont son altitude) et les pertes RF de l'installation, il est alors possible de définir la position la plus vraisemblable 82 entre les deux positions possibles, en établissant un estimateur basé sur la visibilité de la cible par le radar (selon l'altitude du radar et de la cible) et la cohérence de la puissance reçue du squitter selon les deux positions.

En exploitant simultanément :
- La portée en réception asynchrone du radar sur les diagrammes SUM et DIFF ;
- La détection et la localisation de cibles à l'aide d'un seul squitter ;
le radar détecte avantageusement des cibles ADS-B à très longues portées, classiquement plus de deux fois la portée opérationnelle 44 du radar (voir la figure 6).

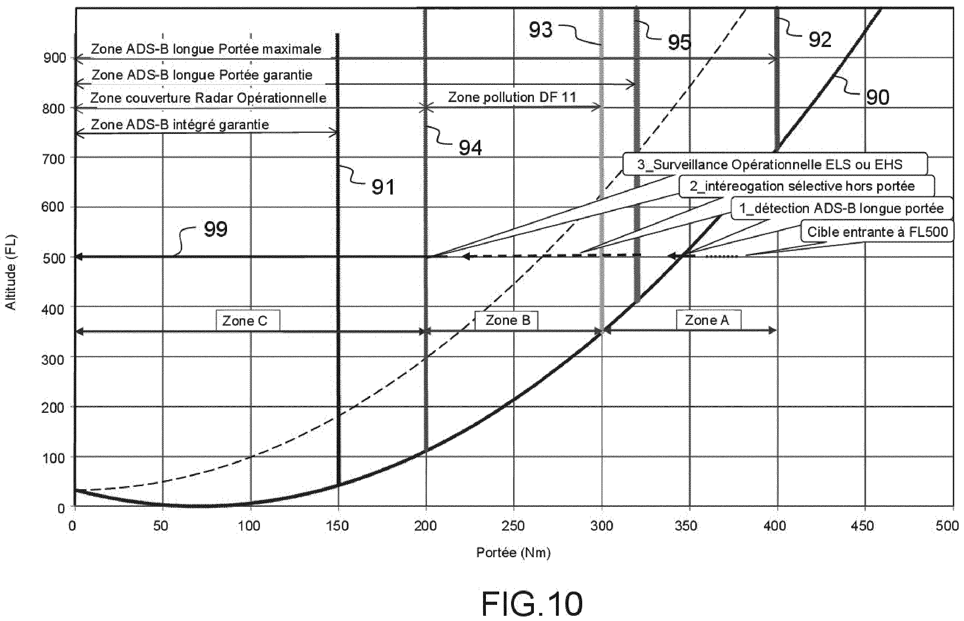

La figure 10 illustre les différentes zones de détection en regard de la trajectoire 99 d'un avion par exemple à FL500 (environ 15000 mètres d'altitude) et en regard de la visibilité de l'avion, représentée par une courbe 90 fonction de l'altitude à la fois du radar et de la cible. La figure 10 permet de visualiser pour cet exemple en fonction de la distance de la cible en abscisse et de l'altitude de la cible en ordonnée:
- La zone de détection ADS-B longue portée maximale délimitée par une ligne quasi verticale 92, fonction de la puissance du transpondeur et de la *sensibilité du récepteur ADS-B par le diagramme SUM du radar ;*
- La zone de détection ADS-B longue portée minimale garantie délimitée par une ligne quasi verticale 95.
- *La zone maximale de pollution de réponses non* sélectives DF11 (portée de pollution d'émission) délimitée par une ligne quasi verticale 93, fonction de la sensibilité du transpondeur mode S aux interrogations du radar par le diagramme SUM ;
- La portée opérationnelle du radar garantie délimitée par une ligne quasi verticale 94
- La zone de détection usuelle d'un récepteur ADS-B intégré par le diagramme CONT, délimitée par une ligne quasi verticale 91.
Il est à noter que, typiquement, les transpondeurs diffusant des squitters ADS-B étant par nature récents, leurs caractéristiques RF sont usuellement bonnes donc au-dessus du minimum d'un transpondeur mode S quelconque, lequel contraint usuellement la portée opérationnelle du radar se devant de traiter toutes les cibles Mode S même celles non équipées en ADS-B.

En partant de la limite de visibilité 90 de l'avion, selon l'altitude du radar par suite de la rotondité de la terre, on visualise la zone de détection selon l'invention de squitter ADS-B en longue portée du plus favorable (ligne 92) à la limite garantie de détection des squitters ADS-B (ligne 95), à partir de laquelle l'avion en vol radial peut être détecté avant d'entrer dans la zone de pollution 93, puis dans la zone opérationnelle du radar 94 et enfin dans la zone de détection ADS-B intégrée 91 (détection ADS-B classique garantie).

Si on considère un avion, par exemple à l'altitude FL500, entrant dans la couverture du radar, l'invention permet de considérer trois zones :
- Une zone A, où l'on détecte des squitters ADS-B en longue portée avant le début possible de la pollution DF11 ;
- Une zone B, correspondant au début de la pollution DF11 avant la couverture radar ;
- Une zone C, correspondant à la couverture radar incluant la réception usuelle ADS-B intégrée.

Comme le montre la description qui précède, la présente invention se base sur le fait que l'intégration de la fonction ADS-B dans une architecture radar est quasi identique au traitement de signal mode S du radar des réponses synchrones (DF11, DF04/05, DF20/21) puisque les squitters ADS-B ne sont en fait que des réponses mode S longues. L'invention permet en outre, dans le lobe principal SUM ou DIFF du faisceau radar :
- de localiser en azimut et en puissance les squitters reçus en effectuant une mesure radar usuelle très précise, ici sur une réponse asynchrone au lieu d'une réponse synchrone comme usuellement :
- d'obtenir un gain d'antenne important, de l'ordre de 15dB de plus par rapport au gain sur le diagramme CONT, usuellement utilisé pour la détection ADS-B, soit une portée de l'ordre de quatre fois supérieure à la portée usuelle ADS-B intégrée (classique) (Pour des raisons de facilité de représentation, les divers espacements ne respectent pas une échelle) ;
- de localiser une cible à très longue portée avec un seul squitter (et non deux comme requis usuellement lorsque l'on ne cherche pas à détecter à très longue portée), en exploitant la connaissance de la position du radar, la mesure précise en azimut fait par ce radar et la position CPR relative en latitude et longitude codée dans le squitter ADS-B détecté.

Certes la couverture temporelle reste faible, inférieure ou égale à 1,4% selon la largeur du diagramme SUM, mais l'invention permet au radar secondaire de traiter de manière similaire les cibles lointaines à très longue portée (entre 200 Nm et 500 Nm comme le montre la figure 10), comme cela est fait classiquement avec des cibles plus proches avec un récepteur ADS-B intégré usuel exploitant le diagramme omnidirectionnel CONT.

On décrit maintenant des avantages apportés par l'invention, exploités en deuxième étape 120 (figure 1), concernant notamment :
- Au niveau du radar :
   - La réduction de la pollution à 1090 MHz ;
   - La détection des conflits de code II/SI et la détection des cibles verrouillées à tort dans la zone de double couverture entre les 2 radars en conflit;
   - La correction de la distance mesurée par le radar en fonction de la propagation ;
- Au niveau de la sécurité ATC :
   - La détection de transpondeur défaillant en sensibilité à 1030 MHz ;
   - L'établissement de carte de pression atmosphérique et la détection d'altimètres défaillants.
On présente ci-après ces cinq améliorations opérationnelles, avantageusement apportées par l'invention.

### Réduction de la pollution à 1090 MHz et du taux de réponses des cibles en dehors de la couverture opérationnelle du radar.

Actuellement l'occupation du spectre 1 090MHz devient un des points durs de la surveillance ATC. La pollution rencontrée est due à son succès et les réponses exploitées y sont de différents types tels que :
- DF11 : pour l'acquisition des cibles nouvelles en Radar Mode S ;
- DF04/05 : pour la Surveillance ATC en mode S : ELementary Surveillance (ELS) ;
- DF20/21 : pour la Surveillance ATC en mode S : « EnHance Surveillance » (EHS) ;
- DF0 : pour l'anticollision active TCAS ;
- DF17 : les squitters ADS-B pour l'anticollision passive ACAS (« Système anticollision aéroporté »).

Les réponses D04/05/17/20/21 perdurent puisqu'étant la finalité de la fonction qu'elles portent d'un radar Mode S dans son emploi opérationnel. Les réponses DF0 seront à termes remplacées par les DF17. Les réponses DF11 sont issues des cibles non encore connues par un radar et ne sont remplaçables qu'en partie par un moyen autre tel que :
- cluster de radars Mode S ;
   mais celui-ci ne réduit la pollution qu'à l'intérieur de sa couverture, la pollution DF11 perdurant en dehors de la couverture commune du cluster ;
- l'initialisation de piste sur squitter ADS-B ;
   mais la couverture RF d'un récepteur omnidirectionnel ADS-B est environ deux fois plus faible que celle du radar et donc n'est exploitable qu'à courte et moyenne portée du radar pour initialiser des pistes radar sur squitter ADS-B, cela ne résolvant donc pas la pollution en longue et limite de portée du radar

Pour décrire l'apport de l'invention à la réduction de la pollution du spectre 1090 MHz, on se réfère à la figure 10 : si on considère une cible volant à FL500 entrant dans la couverte du radar :
- Zone A : quasiment dès qu'elle est visible elle peut être détectée en ADS-B longue portée ;
- Zone B : si le radar est autorisé à cet azimut, il peut alors la verrouiller par des interrogations sélectives type UF4 dès qu'elle rentre dans la couverture d'émission du radar, donc avant même qu'elle ne commence à répondre aux interrogations non sélective DF11, puis le radar maintient des interrogations sélectives sur un rythme plus faible (environ 15 à 18 sec) juste assez pour éviter que la cible se déverrouille: réduisant ainsi la pollution de DF11 (3 à chaque tour de 5sec) à une pollution plus réduite en DF04 (1 tous les 3 tours de 5sec) donc dans un rapport proche de 10 ;
- Zone C : la cible rentre dans la couverture opérationnelle du radar, la piste est alors avantageusement déjà établie.
L'invention permet ainsi de réduire à la fois la pollution due à notre radar et de réduire le taux de réponses générées inutilement par ce transpondeur tout en accélérant la mise en piste du radar dès son entrée dans la couverture opérationnelle du radar Mode S.

### Détection de zone de conflit de code II/SI à longue distance et détection de cibles ADS-B verrouillées à tort.

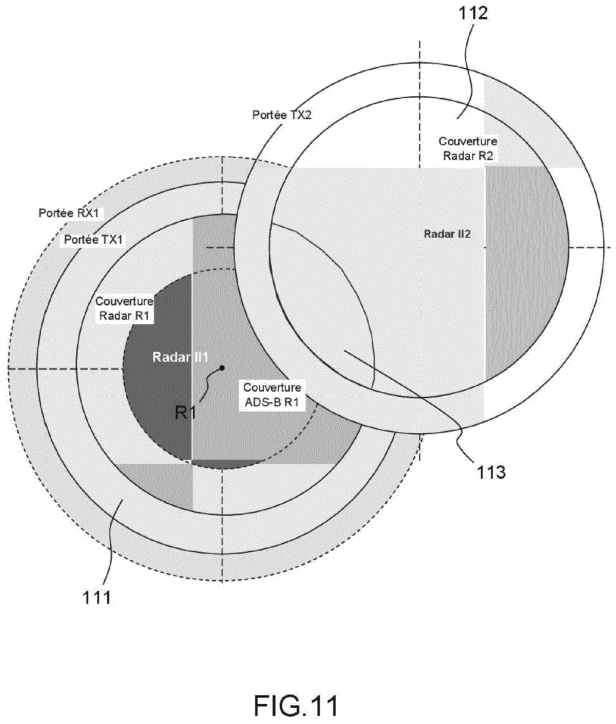

On rappelle ci-après le principe du conflit de code II/SI en limite de portée du radar, en regard de la figure 11. Plusieurs solutions (voir notamment la demande de brevet FR1913154) proposent de détecter une zone de la couverture radar présentant un conflit de code II/SI avec un autre radar R2 proche du radar R1 concerné, leurs couvertures opérationnelles 111, 112 se chevauchant. La zone de chevauchement 113 représente la zone de conflit de code II/SI (si II1 = II2) entre les deux couvertures opérationnelles où les deux radars R1, R2 verrouillent donc sur le même code II/SI les cibles entrant dans leur couverture, les masquant ainsi à l'autre radar.

Si on considère, à titre d'exemple, les différentes approches existantes selon la position d'un radar R1 très longue portée typiquement 250 Nm (celle de R2 étant réciproque), dans l'azimut commun de R1 et R2 la différence entre la distance maximale entre les cibles sortantes (donc lointaines car déjà verrouillées par R1) et les cibles entrantes pour R1 (donc vues seulement quand plus proches car toujours verrouillées par R2) indique une probabilité de conflit. Cette méthode est uniquement indicative (probabilité sur du comportement) et elle ne permet pas de constater qu'une cible entrante n'a pas été vue dans la zone de conflit donc encore moins d'y pallier, ainsi la sécurité ATC n'est pas assurée.

Dans cet azimut commun de R1 et R2, comme dans toute la couverture ADS-B du radar R1, la mise en piste radar mode S de cible non encore détectée (par des appels généraux UF11/DF11 ou par le cluster mode S) en utilisant l'adresse mode S ainsi que la position donnée par le squitter ADS-B diffusé par la cible, permet :
- de traiter le conflit de code II/SI dans la zone commune 114 de couverture opérationnelle de R2 et celle ADS-B de R1 ;
- d'assurer une grande réactivité et donc de détecter des cibles, ADS-B, verrouillées par R2 dès leur présence dans la couverture ADS-B de R1
mais comme la portée usuelle d'un récepteur ADS-B intégré de R1 est limitée par le gain plus faible de la voie CONT comparée à la voie SUM de R1 (environ 15dB), cela ne couvre pas toute la zone de conflit pour des radars en longue portée.

Pour les mêmes raisons l'analyse de la présence et de la distribution des fruits telle que décrite dans la demande de brevet FR1913154 s'applique désormais à tous les avions mode S qu'ils soient ou non équipés d'ADS-B OUT mais est, comme pour la portée ADS-B de R1, limitée par le gain plus faible de CONT vs SUM de R1, donc cette analyse s'applique pour des radars de moyenne portée.

Selon l'invention, les cibles ADS-B sont désormais détectées et localisées par leur squitter et mis en piste ADS-B bien avant la couverture opérationnelle du radar ce dès la zone de réception des appels généraux UF11 et DF11 qui est aussi celle des interrogations sélectives UF04/05 et DF04/05 à cette distance lointaine du radar comme le montre la figure 10.

Si le principe de suppression de pollution décrit précédemment n'est pas appliqué (en cas par exemple de refus par l'utilisateur de l'autorisation de verrouillage hors couverture donc en zone B), le radar R1 peut toujours néanmoins interroger cette cible dès son entrée dans sa zone de couverture opérationnelle (zone C) et ainsi assurer une surveillance mode S parfaite dans la zone complète de conflit de code II/SI, à conditions cependant que la cible soit équipée en ADS-B.

Le conflit de code II/SI n'est déclaré que dans la couverture opérationnelle du radar 94 par suite si la cible ADS-B a été verrouillée en zone C pour réduire la pollution des DF11 alors l'invention propose de relâcher le verrouillage en entrée de zone C, si il y avait autorisation de le faire, pour vérifier l'absence de DF11 de cette cible en zone B pour déclarer le conflit de code II/SI alors que le radar reçoit des DF04/05 en interrogations sélective de cette même cible, donc avec cette méthode on détecte d'abord la cible et ensuite seulement on vérifie s'il y a conflit de code II/SI ou non, notamment pour alerter sur la potentielle non détection d'avions de type mode S non ADS-B.
Si la cible ADS-B n'a pas été verrouillée en zone C alors l'absence de réponse DF11 de sa part au radar avant son entrée en zone B, donc avant son verrouillage en couverture opérationnelle du radar, devient un indicateur de conflit de code II/SI.

### Correction de la distance mesurée par le radar en fonction de la propagation.

Il est connu que les ondes d'un radar secondaire à 1030 MHz et 1090 MHz ne se propagent pas selon une ligne droite, suite aux distorsions d'indice dans les couches de l'ionosphère, il en résulte que les cibles lui apparaissent plus éloignées qu'elles ne le sont en réalité.

Selon l'invention, pour corriger la distance mesurée par le radar, on peut utiliser les mêmes squitters ADS-B, que ceux utilisés pour la détection ADS-B à longue portée :
- Les messages ADS-B « Airborne Position Message » (« Message de position aérien ») transmis environ toutes les 0,5 secondes délivrent à la fois la position en latitude/longitude et l'altitude barométrique ;

L'étape 110 ayant permis de localiser la cible ADS-B en position en latitude et longitude et l'altitude avec un seul squitter associée à la position connue du radar en latitude et longitude permettent de recalculer la distance exacte de la cible au radar au lieu géographique et altitude où celle-ci se situe, ce qui est principalement sensible pour les radars en haute altitude (supérieure à 1 000 mètres) ayant une visibilité sur ces cibles à moyenne altitude, à très longue distance du radar.

L'invention propose donc, sur une base de temps glissante qui peut être ajustable pour être dépendante de la stabilité atmosphérique des lieux, d'effectuer par cellule géographique 3D et par tranche d'altitude une statistique sur la différence entre la distance mesurée par le radar et celle calculée par les cibles ADS-B présentes dans la cellule Ainsi à chaque cellule, à l'aide des cibles ADS-B, est associée une différence moyenne de distance mesurée par le radar et géométrique. Cette analyse peut être conduite en zone C, voire même dès la zone B si le radar est autorisé à interroger en dehors de couverture opérationnelle

Si la statistique par cellule est représentative (c'est-à-dire basée sur un nombre d'échantillons suffisant présentant une stabilité de différence de distance et une cohérence avec les cellules voisines) alors à chaque détection synchrone par le radar de cible SSR, Mode S, IFF, qu'elle soit ADS-B ou non, la distance mesurée (incluant donc la propagation sur les couches ionosphériques) peut être complétée par une évaluation de la distance géométrique en corrigeant la distance mesurée de la différence moyenne de cette cellule à cette altitude donc de la contribution des réflexions ionosphériques. La distance mesurée par le radar est ainsi corrigée en fonction des différences moyennes calculées sur les cellules géographiques survolées successivement par la cible. Lors d'une gestion multi radars, cette correction de la distance permet en outre d'améliorer l'association des pistes issues de différents radars pour la même cible compensant ainsi la propagation qui n'est pas la même sur les couches pour ceux-ci.

### Détection de transpondeurs de faible sensibilité

Un but de cette étape optionnelle de l'invention est de détecter au plus tôt lors de l'entrée dans la couverture lointaine du radar la présence d'avions présentant un transpondeur de faible sensibilité, c'est-à-dire en deçà des seuils de la norme. On peut ainsi alerter sur la fragilité potentielle de détection synchrone de ces avions par le radar cad des avions qui lors de manoeuvre réduisant alors leur champ rayonné reçu du radar peuvent alors ne plus être détectés. L'OACI définit en Annex 10 vol IV les caractéristiques RF au niveau de l'antenne de transpondeur installé dans les avions :
- en sensibilité : -71 à -77 dBm pour l'écoute des interrogations (mode Synchrone uniquement) ;
- en puissance : 51 à 57 dBm (125 à 500W) pour l'émission des réponses Synchrone et Asynchrone.

La demande de brevet FR1800479 propose d'évaluer la sensibilité d'un transpondeur en configuration active, typiquement lors du décollage de l'avion d'un aéroport, a priori à courte distance, en émettant différentes interrogations, supplémentaires à la surveillance de la cible. Ces interrogations sont atténuées en puissance (à la fois par la réduction au niveau de l'émetteur du radar mais aussi en utilisant l'atténuation du gain d'antenne quand la cible est très dépointée dans le lobe) afin de définir pour quelle puissance la cible ne répond plus. En effet, comme la puissance des réponses du transpondeur reste maximale même à courte distance de l'interrogateur, on sait que la non-détection de la réponse par le radar est uniquement due à la non interprétation de l'interrogation par le transpondeur.

L'invention a ici le même but et propose d'évaluer la sensibilité du transpondeur en configuration quasi passive, c'est à dire sans générer d'interrogation supplémentaire donc sans pollution ajoutée contrairement à l'approche précédente, dans le même but d'alerter de la présence de transpondeurs trop peu sensibles.

Pour cela, dès la réception du squitter ADS-B dans le lobe d'antenne principal (SUM et/ou DIFF), la cible est identifiée en adresse mode S et localisée en azimut et distance. Afin de limiter la pollution générée par les réponses DF11 que la cible émet dès qu'elle interprète les interrogations, on verrouille au plus tôt sélectivement la cible via des interrogations sélectives à pleine puissance de l'émetteur du radar en son centre lobe (donc à gain maximum), à très bas taux de répétition (typiquement 1 fois toutes les 15 secondes).

Comme le radar a localisé la cible via les squitters ADS-B de cette cible, il est acquis que la puissance émise par le transpondeur est conforme aussi quand la cible commence à répondre à une interrogation non sélective UF11 ou sélective UF04/05, celle-ci est donc juste au-dessus du seuil de sensibilité en réception du transpondeur, le radar peut alors calculer la puissance reçue au niveau de l'antenne du transpondeur en exploitant les caractéristiques, comme cela est décrit dans la demande de brevet FR1800479 citée précédemment, ces caractéristiques étant : pour le radar :
- gain d'antenne (gain maximal - perte de gain d'antenne due au dépointage en azimut de la cible lors de l'interrogation) ;
- pertes dues aux câbles entre émetteur et antenne ;
- puissance crête de son émetteur ;
pour la cible :
- perte de gain d'antenne fonction de l'élévation de la cible vue au niveau de l'antenne du radar ;
- pertes de propagation estimées en considérant que les phénomènes de propagation sont similaires entre les interrogations et les réponses puisque les fréquences sont très proches (1030MHz pour les interrogations et 1090MHz pour les réponses) tout en tenant compte des autres caractéristiques connues liées aux deux fréquences.

Dans les deux cas, en commun au plus tôt pour des cibles apparaissant dans l'espace aérien, et bien qu'ayant des différences entre les deux approches, indiquées ci-dessous, celles-ci se complètent pour la même finalité.

Pour la demande de brevet FR1800479, on cherche à effectuer une mesure de sensibilité typiquement lors du décollage d'un avion d'un aéroport, donc à faible distance en réduisant la puissance émise dans les interrogations successives jusqu'à basculer sous le seuil de sensibilité en réception, provoquant la non réponse du transpondeur : la recherche est donc active et polluante mais reste acceptable car elle n'est effectuée qu'à l'initialisation de la trajectoire.

Selon la présente invention, on cherche à effectuer une mesure de sensibilité à longue distance typiquement avant même l'entrée d'un avion dans l'espace aérien du radar. Etant donné que le bilan descendant (avion vers radar) est bon puisque les réponses ADS-B sont détectées, si l'avion ne répond pas aux interrogations non sélectives ou sélectives cela implique que son transpondeur est encore en dessous du seuil de sensibilité en réception des interrogations à 1030 MHz émise par le radar secondaire. Les interrogations sélectives supplémentaires destinées au transpondeur ne le polluent pas puisqu'il ne les capte pas tant qu'il n'a pas basculé au-dessus du seuil de sensibilité en réception.

La solution apportée par l'invention est favorable à la sécurité de l'ATC, car celle-ci requiert de détecter au plus tôt, lors du vol d'un avion, une quelconque défaillance des systèmes de surveillance.

### Détection d'altimètres défaillants.

La séparation en altitude des aéronefs est une des bases de la sécurité aérienne, tant au niveau du contrôle aérien que des systèmes automatiques comme les systèmes de bord d'anticollision. La mesure de la pression atmosphérique définit l'altitude locale d'un avion et permet donc d'assurer une séparation en altitude barométrique entre les avions dans un même couloir aérien. Il est connu que la défaillance des altimètres peut causer des catastrophes aériennes. Il est donc important de détecter au plus tôt voire en temps réel, la défaillance d'un altimètre barométrique, ce que permet la présente invention avant ou dès l'entrée d'un avion dans la couverture aérienne d'un radar secondaire.

Une première étape pour détecter des altimètres barométriques défaillants consiste à établir, par cellule géographique 3D, une pression atmosphérique moyenne conduisant à l'établissement d'une carte des différences entre altitude barométrique et altitude géométrique, la couverture ADSB longue portée de l'invention ayant préalablement été scindée en cellules géographiques. La dimension d'une cellule peut être typiquement de 1° en latitude et de 1° en longitude.

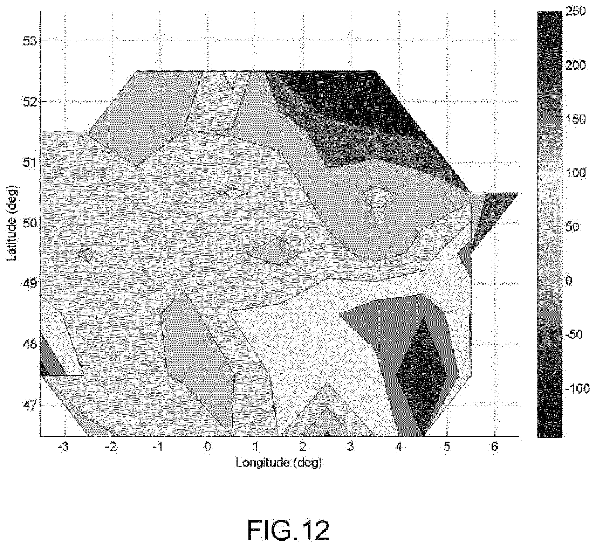

Les informations obtenues à l'aide d'un second type de message ADS-B " Airborne Velocity Messages " transmis toutes les 0,5 secondes délivrent la différence d'altitude entre la mesure barométrique et la mesure géométrique (obtenue par positionnement par satellite GNSS notamment). Selon l'invention on effectue une statistique sur cette différence, par cellule géographique, sur une base de temps glissante qui peut être ajustable pour tenir compte de la stabilité atmosphérique des lieux. La figure 12 illustre un exemple carte des moyennes des différences entre altitudes barométrique et altitudes géométrique, ainsi obtenue. La gradation des moyennes correspond à la gradation des nuances de gris sur la carte.

En association avec ces moyennes par cellule, on considère aussi :
- Le nombre de mesures dans la cellule ayant permis d'établir la moyenne ;
- Un écart type des mesures dans chaque cellule reflétant la stabilité de mesure dans la cellule, donc de la stabilité de la pression atmosphérique dans cette cellule.

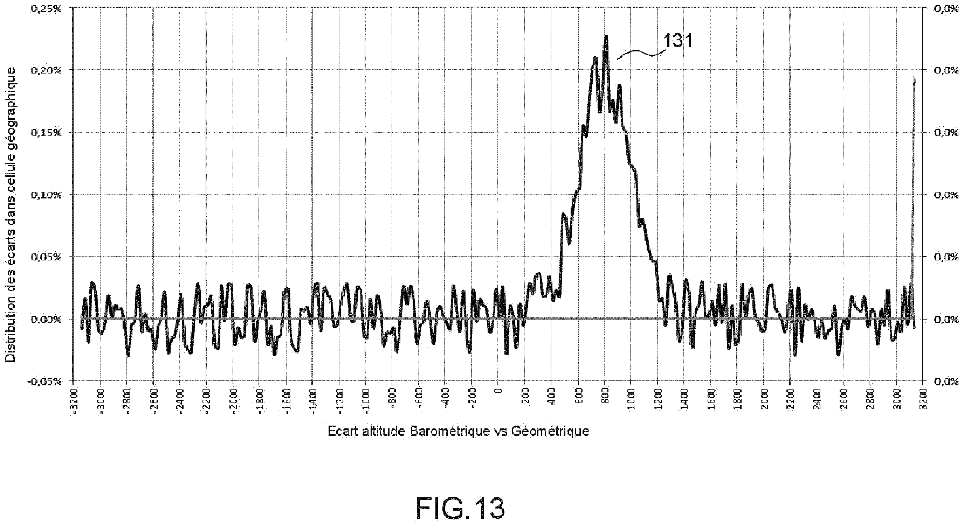

Selon l'invention, sur le rythme de la base de temps glissante (base de temps glissante sur laquelle sont effectuées les moyennes de différence par cellule géographique 3D) :
- Pour chaque cellule géographique, on fait l'analyse de la distribution des différences entre altitude barométrique et altitude géométrique sur la plage des valeurs possibles délivrées dans le squitter ADS-B, typiquement au pas de 25 pieds comme l'illustre la figure 13 qui présente un exemple de distribution 131 de ces différences pour l'ensemble des cibles présentes dans la cellule géographique ;
- Puis si :
   - d'une part, l'écart type des différences est inférieur à un paramètre de l'invention montrant une stabilité des différences d'altitude dans cette cellule et ;
   - d'autre part, un nombre de différences dans la cellule est supérieur à un autre paramètre, montrant une représentativité de la moyenne de la cellule ;
alors toute cible du radar présente dans la cellule a sa différence d'altitude (barométrique/géométrique) évaluée par rapport à la moyenne des différences d'altitude.
Les deux paramètres de l'invention permettent à l'opérateur d'ajuster l'invention aux caractéristiques de son site radar :
- la stabilité atmosphérique via l'écart type
- la charge en avion via le nombre de mesures

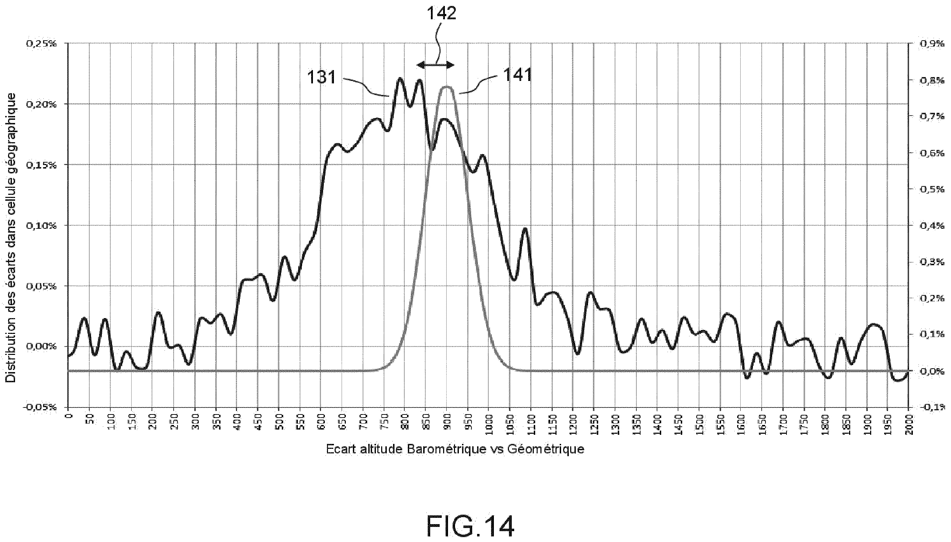

Si cette différence d'altitude est proche de la distribution des autres différences de la cellule, selon un critère 142 de proximité donné, la cible est considérée comme ayant une différence d'altitude barométrique/géométrique cohérente et son score est valorisé en tant que piste ADS-B, ce cas est illustré par la figure 14. Cette figure présente la différence de la cible par une courbe 141 proche de la distribution de l'ensemble des différences 131.

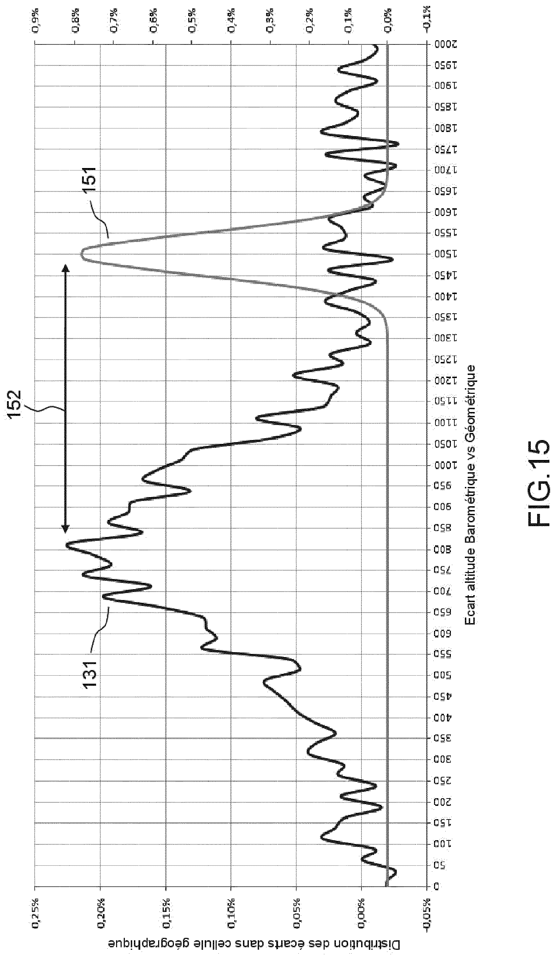

Si cette différence 151 est en dehors de la distribution des autres différences de la cellule par un éloignement 152 trop important, comme illustré par la figure 15, la cible est considérée comme ayant une différence d'altitude barométrique/géométrique incohérente et son score en tant que piste ADS-B est dévalorisé, en lui attribuant la valeur -1 au lieu de la valeur +1 dans le cas précédent (figure 14).

Le score de cohérence de la différence en altitude barométrique/géométrique de chaque piste ADS-B est analysé sur la base d'un nombre donné de comparaisons effectuées pour déclarer auprès d'un utilisateur du radar si ce score est inférieur à une valeur présumant d'un altimètre défaillant. Cette valeur est définie en considérant la précision de mesure de position ADS-B transmis dans les squitters, lesquels ont été utilisés pour faire établir la différence d'altitude barométrique/géométrique tant pour la référence de la cellule que pour la cible concernée. Ainsi, plus la détection d'erreur d'altimétrie est précise plus elle réduit la population de cibles utilisées, donc concernées par le test, plus l'invention doit intégrer cette plus faible quantité de données par cellule sur une fenêtre glissante plus longue. Ce paramètre permet d'ajuster le compromis usuel entre précision de mesure et stationnarité du contexte de la mesure

La détection à très longue portée des squitters ADS-B permet de réaliser cette analyse statistique avant que la cible entre dans la couverture de responsabilité du radar mode S et ainsi permet à un contrôleur aérien de gérer la séparation entre une telle cible et celles l'environnant avec plus de marge pour assurer la sécurité ATC, même en cas de défaut d'altimètre.

## Revendications

1. Procédé de localisation de cibles émettrices de squitters ADS-B par un radar secondaire comportant une antenne (1) présentant un diagramme de rayonnement formant une voie somme dite SUM, un diagramme de rayonnement formant une voie différence dite DIFF et un diagramme formant une voie de contrôle dite CONT, le radar secondaire ayant une couverture d'interrogation (43) prédéfinie, **caractérisé en ce que** la localisation desdites cibles est effectuée selon les étapes suivantes :
- détection de squitters ADS-B reçus sur ladite voie CONT (102), sur ladite voie SUM (103) et sur ladite voie DIFF (104) ;
- mesure au moins de la puissance desdits squitters et de leur azimut par rapport audit radar (110) ;
la localisation d'une cible émettrice de squitters ADS-B étant calculée en exploitant au moins la détection d'un seul squitter ADS-B à partir de la position en latitude et longitude dudit radar et de la mesure en azimut (71) dudit squitter ADS-B par rapport audit radar, ladite position étant calculée à partir des détections sur la voie SUM et sur la voie DIFF, une cellule de position dite CPR (72) codée dans ledit squitter étant sélectionnée par ladite mesure en azimut.

2. Procédé selon la revendication 1, **caractérisé en ce que**, dans le cas où deux positions codées CPR (81, 82) dans ledit squitter sont positionnées possibles dans un même secteur azimutal, on discrimine lesdites deux positions (81, 82) par utilisation de la puissance mesurée et de l'altitude codée dans ledit squitter ADS-B, la position retenue (82) étant la position la plus vraisemblable selon un estimateur basé sur la visibilité de ladite cible et la cohérence de la puissance reçue par le radar selon la distance de la cible au radar.

3. Procédé selon l'une quelconque des revendications précédentes, **caractérisé en ce qu'**il comporte une étape (120) dans laquelle l'acquisition sélective d'une cible est assurée dès son entrée dans la couverture d'interrogation (43) dudit radar en exploitant :
- La position codée dans les squitters ADS-B émis par ladite cible dès son entrée dans une couverture en réception (42) dudit radar ;
- L'identité sélective de ladite cible contenue dans son adresse mode S codée dans lesdits squitters.
une seule interrogation sélective étant émise tous les N tours de rotation de l'antenne (1) pour verrouiller la cible sur le code de la station radar et ainsi éviter la pollution de réponses DF11 qu'une cible génère usuellement à chaque tour potentiellement dès son entrée dans ladite couverture d'interrogation (43) jusqu'en zone de portée opérationnelle (44) dudit radar.

4. Procédé selon l'une quelconque des revendications précédentes **caractérisé en ce qu'**il comporte une étape (120) dans laquelle lesdites cibles étant détectées et localisées par leurs squitters ADS-B avant la couverture d'interrogation (43) dudit radar, lesdites cibles sont mises en piste ADS-B dès l'entrée dans ladite couverture d'interrogation permettant leur acquisition par ledit radar secondaire puis lesdites pistes sont momentanément déverrouillées lors de leur entrée dans ladite couverture radar opérationnelle pour être aptes à détecter leur état de verrouillage éventuel par un autre radar, c'est-à-dire l'absence de réponses synchrones DF11, et ainsi potentiellement pouvoir alerter d'un conflit de code II/SI pour d'autres cibles mode S non ADS-B tout en assurant la surveillance sélective Mode S de cette cible dès son entrée dans la couverture opérationnelle dudit radar.

5. Procédé selon l'une quelconque des revendications précédentes, **caractérisé en ce qu'**il comporte une étape (120) dans laquelle on calcule dans une fenêtre temporelle glissante, par cellule géographique survolée par une cible, une moyenne de la différence entre la distance de la cible mesurée par ledit radar et la distance de ladite cible codée dans les squitters ADS-B émis par ladite cible et ce sur l'ensemble des cibles lors de leur passage dans la cellule, ensuite chaque distance mesurée par le radar de toute cible en tout mode est alors corrigée en fonction des différences moyennes calculées pour la cellule géographique survolée par ladite cible.

6. Procédé selon l'une quelconque des revendications précédentes, **caractérisé en ce qu'**il comporte une étape (120) de mesure de la sensibilité de transpondeurs puis la détection de transpondeurs de sensibilité défaillante aux interrogations à 1030 MHz émises par ledit radar en interrogeant sélectivement ou non les cibles émettant des squitters ADS-B localisées par ledit procédé, à l'entrée de la couverture d'interrogation (43) dudit radar et en calculant la sensibilité du transpondeur à partir de la puissance reçue par le transpondeur lors de sa première réponse auxdites interrogations à 1030 MHz, un transpondeur est déclaré de sensibilité défaillante si celle-ci est supérieur à un seuil donné.

7. Procédé selon l'une quelconque des revendications précédentes, **caractérisé en ce qu'**il comporte une étape (120) dans laquelle la détection d'un altimètre défaillant associé au transpondeur d'une cible ADS-B est effectuée en exploitant, sur une série de cellules géographiques survolées par ladite cible, l'écart de la différence entre l'altitude barométrique et géométrique codée dans les squitters ADS-B émis par ladite cible à la moyenne dans une fenêtre temporelle glissante de la différence entre l'altitude barométrique et l'altitude géométrique calculé pour d'autres cibles par cellule pour chacune desdites cellules géographiques survolées par ladite cible, un altimètre étant jugé défaillant si ledit écart (152) dépasse un seuil donné.

8. Radar secondaire, **caractérisé en ce qu'**il est configuré pour mettre en oeuvre le procédé selon l'une quelconque des revendications précédentes.

## Patentansprüche

1. Verfahren zum Orten von ADS-B-Squitter aussendenden Zielen mit einem Sekundärradar, das eine Antenne (1) aufweist, die ein einen Summenkanal, SUM genannt, bildendes Strahlungsdiagramm, ein einen Differenzkanal, DIFF genannt, bildendes Strahlungsdiagramm und ein einen Kontrollkanal, CONT genannt, bildendes Diagramm aufweist, wobei das Sekundärradar einen vordefinierten Abfragebereich (43) hat, **dadurch gekennzeichnet, dass** die Ortung der Ziele mit den folgenden Schritten erfolgt:
- Erkennen von auf dem CONT-Kanal (102), dem SUM-Kanal (103) und dem DIFF-Kanal (104) empfangenen ADS-B-Squittern;
- Messen mindestens der Leistung der Squitter und ihres Azimuts in Bezug auf das Radar (110);
wobei die Ortung eines ADS-B-Squitter aussendenden Ziels durch Auswerten mindestens der Erkennung eines einzelnen ADS-B-Squitters auf der Basis der Breiten- und Längengradposition des Radars und der Azimutmessung (71) des ADS-B-Squitters in Bezug auf das Radar berechnet wird, wobei die Position auf der Basis der Erkennungen auf dem SUM-Kanal und dem DIFF-Kanal berechnet wird, wobei eine in dem Squitter codierte, CPR genannte Positionszelle (72) durch die Azimutmessung ausgewählt wird.

2. Verfahren nach Anspruch 1, **dadurch gekennzeichnet, dass** in dem Fall, in dem zwei codierte CPR-Positionen (81, 82) in dem Squitter möglicherweise im selben azimutalen Sektor positioniert sind, zwischen den beiden Positionen (81, 82) durch Nutzen der gemessenen Leistung und der im ADS-B-Squitter codierten Höhe unterschieden wird, wobei die beibehaltene Position (82) die wahrscheinlichste Position gemäß einem Schätzer auf der Basis der Sichtbarkeit des Ziels und der Kohärenz der vom Radar empfangenen Leistung gemäß der Entfernung vom Ziel zum Radar ist.

3. Verfahren nach einem der vorhergehenden Ansprüche, **dadurch gekennzeichnet, dass** es einen Schritt (120) aufweist, in dem die selektive Erfassung eines Ziels ab seinem Eintritt in den Abfragebereich (43) des Radars sichergestellt wird, durch Auswerten:
- der codierten Position in den von dem Ziel gesendeten ADS-B-Squittern ab dem Eintritt in den Empfangsbereich (42) des Radars;
- der selektiven Identität des Ziels, die in seiner in den Squittern codierten Mode-S-Adresse enthalten ist,
wobei eine einzige selektive Abfrage alle N Umdrehungen der Antenne (1) gesendet wird, um das Ziel auf dem Code der Radarstation zu verriegeln und so eine Verschmutzung durch DF11-Antworten zu vermeiden, die ein Ziel normalerweise bei jeder Umdrehung potenziell ab seinem Eintritt in den Abfragebereich (43) bis zu einer Zone (44) der Betriebsreichweite des Radars erzeugt.

4. Verfahren nach einem der vorhergehenden Ansprüche, **dadurch gekennzeichnet, dass** es einen Schritt (120) aufweist, in dem, wobei die Ziele durch ihre ADS-B-Squitter vor dem Abfragebereich (43) des Radars erkannt und geortet werden, die Ziele ab dem Eintritt in den Abfragebereich in ADS-B-Spuren gebracht werden, die ihre Erfassung durch das Sekundärradar ermöglicht, woraufhin die Spuren bei ihrem Eintritt in den operativen Radarbereich momentan entsperrt werden, um ihren eventuellen Sperrzustand durch ein anderes Radar erkennen zu können, d. h. das Fehlen von synchronen DF11-Antworten, und somit potenziell einen Code-II/SI-Konflikt für andere Nicht-ADS-B-Modus-S-Ziele zu melden und gleichzeitig eine selektive Modus-S-Überwachung dieses Ziels ab seinem Eintritt in den Betriebsbereich des Radars sicherzustellen.

5. Verfahren nach einem der vorhergehenden Ansprüche, **dadurch gekennzeichnet, dass** es einen Schritt (120) aufweist, in dem in einem gleitenden Zeitfenster pro von einem Ziel überflogener geografischer Zelle ein Mittelwert der Differenz zwischen der vom Radar gemessenen Entfernung des Ziels und der Entfernung des Ziels, codiert in den vom Ziel gesendeten ADS-B-Squittern, berechnet wird, und dies für alle Ziele während ihrer Passage durch die Zelle, dann jede vom Radar gemessene Entfernung jedes Ziels in jedem Modus in Abhängigkeit von den durchschnittlichen Differenzen, berechnet für die von dem Ziel überflogene geografische Zelle, korrigiert wird.

6. Verfahren nach einem der vorhergehenden Ansprüche, **dadurch gekennzeichnet, dass** es einen Schritt (120) des Messens der Transponderempfindlichkeit, dann der Erkennung von unzureichender Transponderempfindlichkeit für von dem Radar gesendete Abfragen bei 1030 MHz aufweist, indem von den ADS-B-Squittern ausgesendete und durch das Verfahren geortete Ziele beim Eintritt in den Abfragebereich (43) des Radars selektiv, oder nicht, abgefragt werden und indem die Transponderempfindlichkeit auf der Basis der vom Transponder bei seiner ersten Antwort auf die Abfragen bei 1030 MHz empfangenden Leistung berechnet werden, wobei ein Transponder als unzureichend empfindlich eingestuft wird, wenn diese Leistung über einem bestimmten Schwellenwert liegt.

7. Verfahren nach einem der vorhergehenden Ansprüche, **dadurch gekennzeichnet, dass** es einen Schritt (120) aufweist, in dem die Erkennung eines mit dem Transponder eines ADS-B-Ziels assoziierten unzureichenden Höhenmessers durch Auswerten, in einer Reihe von von dem Ziel überflogenen geografischen Zellen, der Abweichung der Differenz zwischen der barometrischen und der geometrischen Höhe, codiert in den von dem Ziel gesendeten ADS-B-Squittern, vom Mittelwert der Differenz zwischen der barometrischen Höhe und der geometrischen Höhe, berechnet für andere Ziele pro Zelle für jede der von dem Ziel überflogenen geografischen Zellen, in einem gleitenden Zeitfenster erfolgt, wobei ein Höhenmesser als unzureichend beurteilt wird, wenn die Abweichung (152) einen bestimmten Schwellenwert überschreitet.

8. Sekundärradar, **dadurch gekennzeichnet, dass** es zum Durchführen des Verfahrens nach einem der vorhergehenden Ansprüche konfiguriert ist.

## Claims

1. A method for locating targets transmitting ADS-B squitters with a secondary radar with an antenna (1) having a radiation pattern forming a sum channel, designated SUM, a radiation pattern forming a difference channel, designated DIFF, and a pattern forming a control channel, designated CONT, the secondary radar having a predefined interrogation coverage (43), **characterised in that** said targets are located through the following steps:
- detecting ADS-B squitters received over said CONT channel (102), over said SUM channel (103) and over said DIFF channel (104);
- measuring at least the power of said squitters and their azimuth with respect to said radar (110);
the location of a target transmitting ADS-B squitters being computed by exploiting at least the detection of a single ADS-B squitter from the latitudinal and longitudinal position of said radar and of the azimuthal measurement (71) of said ADS-B squitter with respect to said radar, said position being computed from the detections over the SUM channel and over the DIFF channel, a position cell, designated the CPR cell (72), coded in said squitter being selected by said azimuthal measurement.

2. The method according to claim 1, **characterised in that**, in the case where two possible CPR positions (81, 82) coded in said squitter are positioned possibly in one and the same azimuthal sector, said two positions (81, 82) are discriminated between using the measured power and the altitude that is coded in said ADS-B squitter, the retained position (82) being the position of highest likelihood according to an estimator based on the visibility of said target and to the consistency of the power received by the radar based on the distance from the target to the radar.

3. The method according to any one of the preceding claims, **characterised in that** it has a step (120) in which the selective acquisition of a target is ensured as soon as it enters into the interrogation coverage (43) of said radar by exploiting:
- the position coded in the ADS-B squitters transmitted by said target, as soon as it enters into a reception coverage (42) of said radar;
- the selective identity of said target, which is contained in its mode S address, which is coded in said squitters,
a single selective interrogation being transmitted every N rotations of the antenna (1) to lock the target to the code of the radar station and thus to avoid pollution by DF11 replies that a target usually generates on each rotation, potentially as soon as it enters into said interrogation coverage (43) and up to a region (44) of operational range of said radar.

4. The method according to any one of the preceding claims, **characterised in that** it has a step (120) in which, said targets being detected and located via their ADS-B squitters before the interrogation coverage (43) of said radar, said targets are set on ADS-B tracks as soon as they enter into said interrogation coverage, allowing them to be acquired by said secondary radar, then said tracks are momentarily unlocked on their entry into said operational radar coverage to be able to detect their potentially locked state to another radar, i.e. the absence of synchronous DF11 replies, and thus potentially to make it possible to provide warning of a conflict in II/SI code for other mode S targets without ADS-B while ensuring mode S selective surveillance of that target as soon as it enters into the operational coverage of said radar.

5. The method according to any one of the preceding claims, **characterised in that** it has a step (120) in which, in one moving time window, per geographic cell flown over by a target, an average of the difference between the distance of the target measured by said radar and the distance of said target coded in the ADS-B squitters transmitted by said target is computed, and this being done for every target passing through the cell, then each distance measured by the radar of any target in any mode is then corrected in light of the average differences computed for the geographic cell being flown over by said target.

6. The method according to any one of the preceding claims, **characterised in that** it has a step (120) of measuring the sensitivity of transponders, then the detection of transponders of unsatisfactory sensitivity to the interrogations at 1030 MHz transmitted by said radar by interrogating, whether selectively or not, the targets transmitting ADS-B squitters located via said method, on entry into the interrogation coverage (43) of said radar, and by computing the sensitivity of the transponder on the basis of the power received by the transponder on its first reply to said interrogations at 1030 MHz, a transponder being declared to be of unsatisfactory sensitivity if said power is higher than a given threshold.

7. The method according to any one of the preceding claims, **characterised in that** it has a step (120) in which an unsatisfactory altimeter associated with the transponder of an ADS-B target is detected by exploiting, over a series of geographic cells flown over by said target, the deviation of the difference between the barometric and geometric altitudes coded in the ADS-B squitters transmitted by said target from the average, in a moving time window, of the difference between the barometric altitude and geometric altitude computed for other targets per cell for each of said geographic cells flown over by said target, an altimeter being judged to be unsatisfactory if said deviation (152) exceeds a given threshold.

8. A secondary radar, **characterised in that** it is configured to implement the method according to any one of the preceding claims.
